# EUROPÄISCHE PATENTANMELDUNG

(11) **EP 2 383 546 A1**
(43) Veröffentlichungstag der Anmeldung: **02.11.2011**
(21) Anmeldenummer: 10161662.1
(22) Anmeldetag: 30.04.2010
(51) Int. Cl.: G01F 1/075, F16C 17/04, F16C 25/04, F16C 39/06

(54) **Fluidzähler**

(71) Anmelder: Elster GmbH, 55252 Mainz-Kastel (DE)
(72) Erfinder: Temme, Guido, 49186, Bad Iburg (DE)
(74) Vertreter: Zenz

(57) **Zusammenfassung**

Eine Zähleinrichtung für Fluidströme mit einem vom Fluid durchströmbaren Gehäuse. In einer Gehäusewandung ist eine Einstülpung in das Gehäuseinnere ausgebildet. Die Einstülpung ist abschnittsweise als Lagerkörper geformt und ein magnetischer Rotationskörper ist im Gehäuseinneren auf dem Lagerkörper drehbar gelagert und durch den Fluidstrom zur Rotation antreibbar.

Im Inneren des Lagerkörpers ist wenigstens ein Magnetfeldsensor zur Detektion eines Magnetfeldes angeordnet. Im Lagerkörper ist ein Stabilisierungskörper aus leicht magnetischem Material angeordnet, welcher durch ein den Lagerkörper durchgreifendes Magnetfeld des Rotationskörpers magnetisierbar ist und die Lage des magnetischen Körpers in axialer Richtung des Lagerkörpers stabilisiert.

## Beschreibung

Die Erfindung betrifft einen Fluidzähler. Insbesondere betrifft die Erfindung eine Zähleinrichtung für Fluidströme, zum Beispiel Gas- oder Flüssigkeitsströme, wobei ein Gehäuse der Zähleinrichtung von einem Fluid durchströmbar ist. In einer Wand des Gehäuses ist eine Einstülpung in das Gehäuseinnere ausgebildet, welche wenigstens abschnittsweise als Lagerkörper geformt ist. Ein magnetischer Rotationskörper, der im Gehäuseinneren auf dem Lagerkörper drehbar gelagert ist, kann durch den im Inneren des Gehäuses bewegten Fluidstroms zur Rotation auf dem Lagerkörper angetrieben werden.

Im Inneren des Lagerkörpers, also außerhalb des vom Fluid durchströmten Bereich auf der Außenseite des Gehäuses, ist wenigstens ein Magnetfeldsensor zur Detektion eines Magnetfeldes des magnetischen Rotationskörpers angeordnet. Die Signale des Magnetfeldsensors dienen als Maß für die Rotation des Rotationskörpers und damit als Maß für den durch das Gehäuse strömenden Volumenstrom.

Ein Fluidzähler der Eingangs genannten Art ist beispielsweise aus der DE 4114978 A1 bekannt.

Bei diesem bekannten Fluidzähler ist im Gehäuseinneren ein Flügelrad angeordnet, dass einen mit dem Flügelrad umlaufenden Permanentmagneten trägt. Im Bereich der Drehachse, welche in der Einstülpung in das Gehäuseinnere liegt, also einem von Fluidstrom nicht durchströmten Raum, ist ein Sensor angeordnet, der beim Vorbeilauf des Flügelrads auswertbare Impulse erzeugt.

Derartige Fluidzähler dienen üblicherweise zur Ermittlung des Verbrauchs eines Fluidvolumens zum Zwecke der Abrechnung vom Lieferanten an den Verbraucher. Es besteht seit Langem das Bestreben, derartige Systeme einfacher ablesbar und die Verbrauchsdaten leichter auswertbar zu machen und gleichzeitig die Manipulationssicherheit für solche Systeme zu erhöhen. Dennoch muss jederzeit die Sicherheit des Systems gewährleistet sein, insbesondere wenn der Strom potenziell gefährlicher Fluide, wie zum Beispiel brennbarer Gase, gemessen werden soll.

Es ist daher jederzeit sicherzustellen, dass der mit dem Fluid gefüllte Innenraum eines Gaszählers von den Zählwerkskomponenten derart entkoppelt oder jedenfalls dicht abgeschlossen ist, dass sich im Zählwerksbereich keine Leckagen ergeben können. Der Zähler der Eingangs genannten Art trennt aus diesem Grund den Innen- und Außenbereich des Zählers durch eine Einstülpung im Gehäuse, so dass sich aus der Wandung des Gehäuses ein einseitig geschlossener Zylinder in das Gehäuseinnere erstreckt, dessen Inneres mit dem Außenraum des Zählers in Verbindung steht. Dieser Bereich trägt Sensorkomponenten, um ein bewegtes Magnetrad, welches auf dem zylindrischen Ansatz gelagert ist, abzutasten.

Ein Problem bei den bekannten Einrichtungen ist jedoch, dass der im Innenraum des Zählers durch den Fluidstrom angetriebene Magnet in axialer Richtung auf seinem Lager nicht angemessen gesichert werden kann. Eine Lagerung soll nämlich einerseits gewährleisten, dass der Magnet sensibel auch auf geringe Fluidströme reagiert und daher geringe Reibungsverluste und eine geringe Anlaufschwelle aufweist. Andererseits soll der Magnet ausgerichtet zu der erfassenden Sensorik verbleiben und kein übermäßiges Nachlaufverhalten aufweisen.

Aufgabe der Erfindung ist es daher, einen Fluidzähler zur Verfügung zu stellen, welcher eine zuverlässige elektronische Auswertung erlaubt und die mechanische Stabilität und Verlässlichkeit des Fluidzählers verbessert.

Diese Aufgabe wird erfindungsgemäß gelöst durch eine Einrichtung mit den Merkmalen des Patentanspruchs 1.

Gemäß der Erfindung weist eine Zähleinrichtung der Eingangs genannten Art im Lagerkörper einen Stabilisierungskörper auf, der aus weichmagnetischem Material gebildet ist. Dieser Stabilisierungskörper ist durch ein den Lagerkörper durchgreifendes Magnetfeld des Rotationskörpers magnetisierbar und stabilisiert die Lage des magnetischen Körpers in axialer Richtung des Lagerkörpers.

Weichmagnetische Werkstoffe zeichnen sich durch eine geringe Remanenz des Magnetfeldes aus und sind durch das Magnetfeld eines Permanentmagneten leicht zu magnetisieren. Die im Gehäuseinneren angeordnete Magnetanordnung des Rotationskörpers, welcher durch den Fluidstrom angetrieben wird, ist so in ihrer Lagerposition angeordnet, dass das Magnetfeld der Permanentmagnete den weichmagnetischen Stabilisierungskörper durchgreift. Entsprechend wird eine Magnetisierung des weichmagnetischen Stabilisierungskörpers vorgenommen, welcher ortsfest im oder am Lagerkörper angeordnet ist. Durch die Wechselwirkung der Magnetfelder wird der drehbare Rotationskörper in seiner axialen Position stabilisiert. Der Stabilisierungskörper aus dem weichmagnetischen Material ist rotationssymmetrisch um die Drehachse der Rotationskörpers ausgebildet, so dass die Drehung des Rotationskörpers im Gehäuseinneren nicht ungleichmäßig beeinflusst wird. Das weichmagnetische Material verstärkt das durchgreifende Magnetfeld des Rotationskörpers, es wird jedoch kein weiteres Magnetfeld aktiv erzeugt, welches die Erfassung der im Lagerkörper angeordneten Sensoren negativ beeinflussen könnte. Der Stabilisierungskörper weist aufgrund der geringen Remanenz kein signifikantes eigenes Magnetfeld auf. Es wird vielmehr im Stabilisierungskörper ein magnetischer Spiegel bereitgestellt, welcher das drehende Magnetfeld des Rotationskörpers zur Stabilisierung des Rotationskörpers auf dem Lagerkörper spiegelt. Da die Magnetfeldlinien der Felder der Permanentmagnete des Rotationskörpers in den Stabilisierungskörper gezogen werden, resultiert eine axiale Kraft, sobald sich der Rotationskörper in eine Richtung auf dem Lagerkörper bewegt, welche zu einer Entfernung des Rotationskörpers von dem Stabilisierungskörper führt. Entsprechend der gegenseitigen Lagestabilisierung in einer Magnetkopplung mit zwei Permanentmagneten wird derselbe Effekt erreicht, jedoch ohne die nachteiligen Wirkungen, die ein weiterer Permanentmagnet auf die Funktion der Sensorik hätte.

Durch die stattfindende Ummagnetisierung des weichmagnetischen Materials bei Drehung des Rotationskörpers wird außerdem eine Bedämpfung der Drehbewegung bewirkt, welche sich bei dem Zählverhalten des Fluidzählers positiv auswirkt und insbesondere Nachlaufeffekte und ungleichmäßiges Drehverhalten minimiert.

Durch diesen magnetischen Spiegel kann im Inneren des Gehäuses die mechanische Festlegung des Rotationskörpers vereinfacht ausgebildet werden. Ggf. kann zusätzlich durch mechanische Anschläge ein vollständiges Abgleiten des Rotationskörpers von dem Lagerkörper verhindert werden, z.B. für den Fall von starken Erschütterungen beim Transport des Zählers.

Messungen haben ergeben, dass die Wirkung eines derartigen weichmagnetischen Materials, welches beispielsweise in Scheiben- oder Ringform im Lagerkörper angeordnet wird, hinsichtlich Gleichmäßigkeit der Rotationsbewegung und axialer Stabilität äußerst positiv ist.

Der Stabilisierungskörper kann im Inneren des Lagerkörpers angeordnet sein, alternativ kann er auch einteilig zusammen mit dem Lagerkörper ausgebildet sein, zum Beispiel in dessen Wandung eingebettet oder mit dem Lagerkörper verpresst sein.

Der Lagerkörper wird in axialer Richtung versetzt zu den Sensoren angeordnet, welche das Magnetfeld des umlaufenden Rotationskörpers detektieren. Ansonsten könnte die abschirmende Wirkung die Signalerfassung verschlechtern. Grundsätzlich können auch mehrere umlaufende Rotationskörper erfasst werden und/oder mehrere Stabilisierungskörper aus weichmagnetischem Material angeordnet werden, zum Beispiel beidseitig der erfassenden Magnetfeldsensoren.

Der Rotationskörper kann beliebig viele Magnetpole aufweisen, dass weichmagnetische Material wirkt in jedem Fall als Spiegel, welches auch komplexe Magnetfeldanordnungen spiegeln kann und die axiale Lage des umlaufenden Rotationskörpers stabilisiert. Der Stabilisierungskörper ist also universell und braucht nicht auf die Verwendung eines anderen Rotationskörpers angepasst zu werden.

Als weichmagnetische Werkstoffe kommen grundsätzlich sowohl metallische Weichmagnete als auch keramische Werkstoffe in Frage. Beispielsweise können Weicheisenkörper oder Ferritkörper verwendet werden.

In einer bevorzugten Ausführungsform der Erfindung ist der Stabilisierungskörper als ringförmiger Körper ausgebildet. Der Stabilisierungskörper ist dann radialsymmetrisch um die durch den Lagerkörper verlaufende Drehachse des Rotationskörpers angeordnet.

Eine ringförmige Anordnung des weichmagnetischen Stabilisierungskörpers ermöglicht insbesondere, dass durch die Ringöffnung eine Zugang zu dem hinter dem Stabilisierungskörper liegenden Bereich möglich ist. Durch die Öffnung kann z.B. eine Verkabelung für die Sensorik geführt sein. Grundsätzlich ist jedoch auch eine andere Art von rotationssymmetrischer Anordnung, zum Beispiel einer Kreisscheibe, einer Kugel oder eines Zylinderstumpfs möglich.

Vorzugsweise wird im Rotationskörper ein ringförmiger Magnetkörper verwendet, welcher entlang seines Umfangs wenigstens vier Magnetpole aufweist.

Die Verwendung eines Rotationskörpers mit mehr als zwei Magnetpolen ermöglicht eine genauere Auswertung der Drehbewegung sowie auch eine Richtungsfeststellung der Drehbewegung, wie weiter unten erläutert werden wird. Derartige Ringmagnete sind bekannt und handelsüblich erhältlich. Für das weichmagnetische Material macht die Anzahl der Magnetpole keinen Unterschied, da es das einwirkende Magnetfeld ohne eigene Polanordnung aufnimmt und bei einer Rotation entsprechend ummagnetisiert wird.

In einer bevorzugten Ausführungsform der Erfindung sind in der Zähleinrichtung im Lagerkörper zwei richtungssensitive Magnetfeldsensoren angeordnet und als Magnetkörper wird ein Vier-Pol-Ringmagnet verwendet.

Unter richtungssensitiven Magnetfeldsensoren werden hier solche Sensoren verstanden, die je nach ihrer Ausrichtung zum einwirkenden Magnetfeld unterschiedliche Signale liefern. Insbesondere können Hall-Sensoren verwendet werden. Eine Drehung eines solchen Sensors um 180°, senkrecht zu den Feldlinien, führt zu einer Umkehr des Vorzeichens beim ausgegebenen Signal. Also liefern derartige Sensoren ein Ausgangssignal welches davon abhängt, ob sie mit einer ausgewählten Fläche in Richtung des Nordpols oder des Südpols der Magnetfeldlinien orientiert werden. Im Gegensatz dazu liefern nicht-richtungssensitive Sensoren, z.B. magnetoresistive Sensoren, ein Signal als Maß für die Feldstärke, jedoch nicht für die Feldrichtung.

Durch diese Maßnahme ist eine äußerst präzise Auswertung der Signale der Sensoren möglich, insbesondere kann bei geeigneter Ausrichtung der Sensoren im Fluidzähler die Signalantwort der beiden Sensoren mittels Quadratur ausgewertet werden, wie unten weiter erläutert wird.

Vorzugsweise ist die Zähleinrichtung so ausgebildet, dass sich die Magnetfeldsensoren auf gleicher axialer Höhe entlang der Drehachse des Rotationskörpers befinden, jedoch in Drehrichtung um einen Winkel um die Drehachse versetzt sind. Die Sensoren nehmen in diesem Fall das drehende Magnetfeld des Rotationskörpers auf gleicher Höhe war, jedoch in Verlauf eines Umlaufs zu unterschiedlichen Zeiten. Es ist also eine Phasenverschiebung zwischen den Signalen der Magnetfeldsensoren feststellbar und auswertbar.

In einer besonders bevorzugten Ausführungsform der Erfindung sind die Magnetfeldsensoren in dieselbe Raumrichtung ausgerichtet und in Drehrichtung um einen Winkel von 90° versetzt.

Die Ausrichtung in dieselbe Raumrichtung ermöglicht die problemlose Montage der Sensoren auf einer ebenen Fläche, zum Beispiel einer Leiterplatte oder einer sonstigen Montageeinrichtung. Die Sensoren sind also nicht in radialer Richtung nach außen orientiert, sondern translatorisch in einer Ebene versetzt, jedoch in die gleiche Raumrichtung orientiert.

Die einfache Montage erlaubt in Kombination mit der Signalauswertung der mehreren Sensoren eine äußerst weitgehende Analyse der bereitgestellten Signale. Als Ergebnis dieser unten erläuterten deutlich verbesserten Auswertung kann die Abtastung der Sensoren mit verringerter Frequenz ausgeführt werden und auf diese Weise eine deutliche Energieeinsparung erzielt werden.

Die Erfindung wird nun anhand eines bevorzugten Ausführungsbeispiels erläutert, wobei Bezug auf die beiliegenden Figuren genommen wird.
Figur 1 zeigt eine teilgeschnittene Ansicht eines Teils einer erfindungsgemäßen Zähleinrichtung;
Figur 2 zeigt eine Sensoranordnung mit weichmagnetischem Material zum Einsatz in der Zähleinrichtung aus Figur 1;
Figur 3 zeigt eine Stirnansicht auf den Lagerkörper mit Rotationskörper mit Schnittlinien;
Figur 3A zeigt einen ersten Schnitt der Anordnung aus Figur 3;
Figur 3B zeigt einen zweiten Schnitt der Anordnung aus Figur 3;
Figur 4 zeigt in einer Prinzipskizze die Lage der Sensorik in der Sensoranordnung aus Figur 2;
Figur 5 zeigt einen beispielhaften Signalverlauf für die Sensorsignale der Anordnung aus Figur 4.

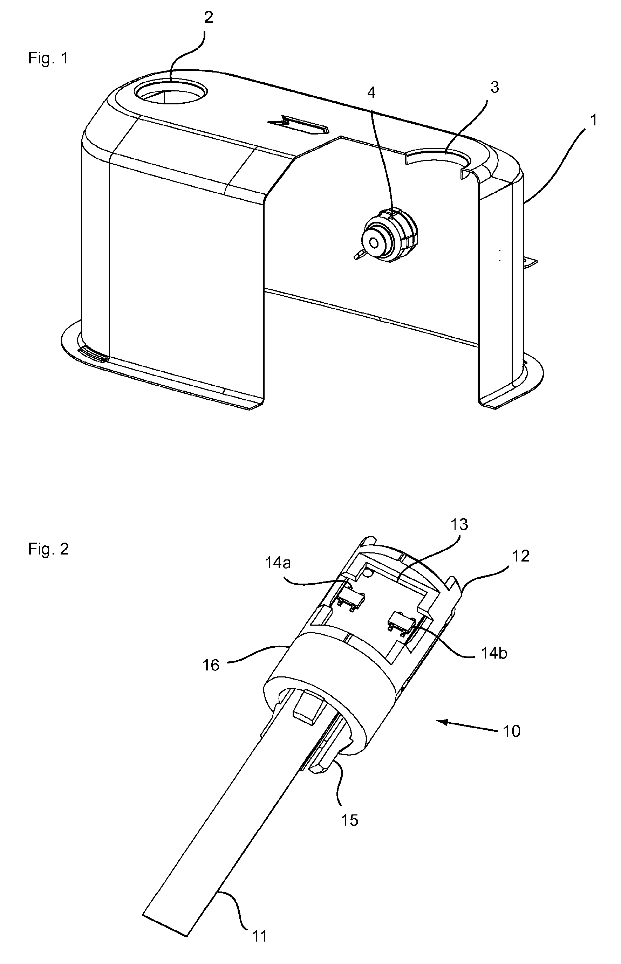

In Figur 1 ist ein Oberteil 1 eines Gaszählergehäuses gezeigt. Auf der Oberseite des Gehäuses sind ein Einlass 2 und Auslass 3 für das Gas gezeigt. Das Gaszählergehäuse wird durch diese Öffnungen 2, 3 vom Gas durchströmt, welches auf Verbraucherseite abgerufen wird. Die durch das Gehäuse strömende Gasmenge soll für eine Verbrauchsermittlung erfasst werden. Die für die Erfindung unwesentlichen Teile (z.B. Unterteil des Zählers, Zuleitungen, innere Mechanik etc.) sind aus Gründen der Übersichtlichkeit nicht dargestellt.

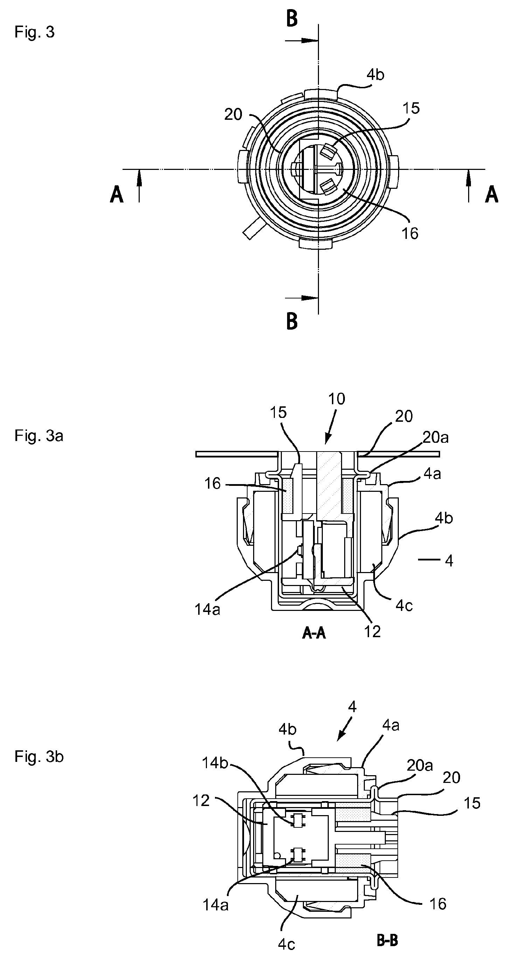

Das Gehäuse 1 ist durchbrochen dargestellt, um den Blick in den Innenraum zu ermöglichen. In dem Innenraum des Gehäuses 1 ist ein Rotationskörper 4 angeordnet, der auf einem Lagerkörper aufgesteckt ist. In Figur 1 verdeckt der Rotationskörper 4 den Lagerkörper. Der Lagerkörper ist als Einstülpung aus der Wandung des Gehäuses 1 ausgebildet und mit dieser Wandung durch Verpressen oder Verschweißen verbunden, wie weiter unten unter Bezug auf die Figuren 3, 3A und 3B beschrieben werden wird.

Im betriebsfähigen Zustand befinden sich in dem Gaszähler weitere Bauteile, welche die Bewegung eines Fluidstroms durch das Gehäuse in eine Drehbewegung des Rotationskörpers 4 überführen.

Der Rotationskörper 4 trägt einen Ringmagneten mit zwei Nord- und zwei Südpolen. Der Ringmagnet rotiert um den Lagerkörper, wobei auch das zwischen den Polen des Ringmagneten erzeugte Magnetfeld rotiert.

In dem Lagerkörper, also im Innenraum des Rotationskörpers 4 ist eine Sensoranordnung 10 eingebracht. Figur 2 zeigt die Sensoranordnung 10 in einer perspektivischen Darstellung. Die Sensoranordnung verfügt über eine Zuleitung 11, welche als Flachbandkabel ausgebildet ist. Eine Halterungsanordnung 12 ist aus Kunststoff gebildet und trägt eine Platine 13 auf welcher Hall-Sensoren 14a und 14b angeordnet sind. Die Hall-Sensoren 14a, 14b sind mit der Zuleitung 11 gekoppelt, so dass durch eine elektronische Auswerteschaltung außerhalb des Gehäuses, wohin das Flachbandkabel 11 geführt ist, die Signale der Sensoren ausgewertet werden können.

Die Halterungsanordnung 12 ist mit ihren äußeren Abmessungen so bemessen, dass es in die Ausstülpung in der Gehäusewandung, den Lagerkörper, von außen einführbar ist. Das Bauteil 12 liegt an der Innenwandung des Lagerkörpers an und stützt sich daran ab.

Das Bauteil 12 weißt außerdem flexible Rastmittel 15 auf, welche einen Stabilisierungskörper 16 aus weichmagnetischem Material halten und in axialer Richtung fixieren. Der Stabilisierungskörper 16 ist als Ringkörper ausgebildet, durch dessen inneren freien Ringraum das Kabel 11 in den Außenbereich des Gehäuses geführt ist.

Die gesamte Sensoranordnung 10 mit dem Stabilisierungskörper 16 wird in den Lagerkörper eingeführt, und zwar so, dass die Hall-Sensoren 14a, 14b sich im inneren Ringraum des Vier-Pol-Ringmagneten im Rotationskörper 4 befinden (siehe auch unten Fig. 3a und 3b). In axialer Richtung liegen die Sensoren 14a, 14b zu dem Gehäuseinnenraum orientiert während der Stabilisierungskörper 16 weiter in Richtung des Gehäuseaußenraums orientiert ist.

Die genaue Lage der verschiedenen Elemente zueinander wird aus den Figuren 3, 3A, 3B deutlicher.

Es ist aus Figur 2 weiterhin ersichtlich, dass die Sensoren 14a und 14b auf einer gemeinsamen Befestigungsebene montiert und kontaktiert sind sowie in dieselbe Raumrichtung orientiert sind. Die dargestellte Ausführungsform erlaubt eine besonders einfache Herstellung des sensiblen Detektionsmechanismus, der außerdem eine flexible und umfangreiche Auswertung ermöglicht, wie weiter unten beschrieben wird.

Figur 3 zeigt eine Aufsicht auf das System, bestehend aus Rotationskörper 4, Lagerkörper 20 und Sensoranordnung 10.

In Figur 3 sind die Schnittebenen A und B gekennzeichnet, die in Figur 3A (Schnittebene A-A) und Figur 3B (Schnittebene B-B) jeweils dargestellt sind.

Wie am besten in Figur 3A erkennbar, ist der Lagerkörper 20 aus einem einseitig geschlossenen Kreiszylinder mit Verdickung gebildet. An den Lagerkörper 20 schließt sich fluiddicht nach rechts und links die Wandung des Gehäuses 1 an, so dass der Lagerkörper 20 eine Einstülpung in die Gehäusewandung bildet und Außenraum vom Innenraum des Gaszählers trennt.

Auf der Außenseite des Lagerkörpers sitzt der Rotationskörper 4, der aus einem zweiteiligen Kunststoffgehäuse 4A, 4B und einem darin aufgenommenen Vier-Pol-Ringmagneten 4C gebildet ist. Der Rotationskörper 4 kann auf dem Lagerkörper 2 rotieren, sofern er von dem Fluidstrom und entsprechenden Übertragungsmitteln angetrieben wird.

Im Inneren des Lagerkörpers ist die Sensoranordnung 10 erkennbar. Der Kunststoffträger mit den Sensoren 14a und 14b erstreckt sich innerhalb des Lagerkörpers 20 in den Bereich, um welchen der Vier-Pol-Ringmagnet 4c umläuft. Der Stabilisierungskörper 16 aus weichmagnetischem Material ist in axialer Richtung versetzt im Innenraum des Lagerkörpers 20 angeordnet, jedoch ebenfalls teilweise innerhalb des inneren Ringraumes des Ringmagneten 4c. Durch die Magnetisierung des weichmagnetischen Materials 16 von dem Ringmagneten 4c wird der Rotationskörper 4 in axialer Richtung stabilisiert und an einem Herunterrutschen in den Innenraum des Gaszählers gehindert. Dennoch können die Sensoren 14a, 14b das rotierende Magnetfeld des Ringmagneten 4c detektieren, welches den Innenraum des Lagerkörpers 20 durchgreift. Der Lagerkörper 20 ist aus einem Edelstahl gebildet, welcher das Magnetfeld des Ringmagneten 4c weitgehend hindurchtreten lässt.

Wie in den Figuren 3A und 3B deutlich zu erkennen, sind die Hall-Sensoren 14a und 14b auf einer gemeinsamen Platine angeordnet und in dem Kunststoffträger 12 gehalten.

In axialer Richtung sind die Sensoren 14a und 14b auf gleicher Höhe montiert, so dass sie das magnetische Rotationsfeld bei einem Umlauf des Ringmagneten 4c mit Phasenverschiebung detektieren.

In dem Lagerkörper 20 ist ein Anschlag 20a ausgebildet, welcher eine Anlagefläche für den Rotationskörper 4 bildet. In Richtung des freien, verschlossenen Endes des Lagerkörpers 20 wird der Rotationskörper 4 durch die Wechselwirkung des Ringmagneten 4c mit dem weichmagnetischen Material 16 stabilisiert. Der Stabilisierungskörper 16 wird bei jeder Veränderung des äußeren Magnetfeldes ummagnetisiert, weist jedoch eine geringe Remanenz auf. Auf diese Weise wird die Drehbewegung des Rotationskörpers leicht bedämpft, was positive Auswirkungen auf das Laufverhalten des Rotationskörpers hat.

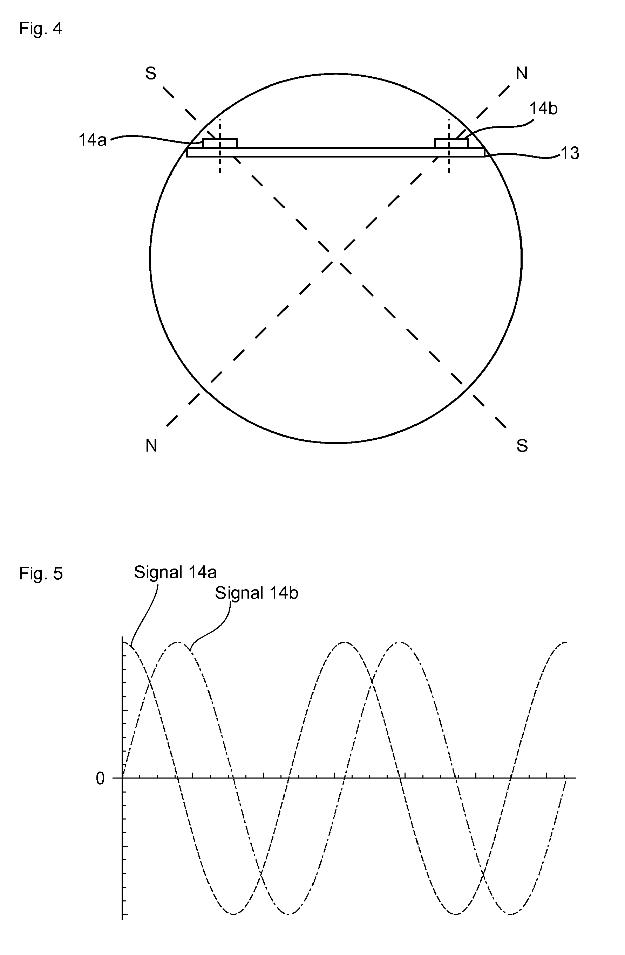

In Figur 4 ist die Anordnung der Sensoren im Magnetfeld schematisch dargestellt. Die Hall-Sensoren 14a und 14b sind so angeordnet, dass sie mit ihren ebenen Flächen in die gleiche Raumrichtung weisen und auf der flachen Leiterplatte 13 befestigt sind. Abstand und Verschiebung zur Rotationsachse des umlaufenden (nicht dargestellten) Rotationskörpers mit Ringmagneten sind so gewählt, dass die Hall-Sensoren in einem Winkel von 90°C, gemessen von der Rotationsachse aus, angeordnet sind. In Figur 4 sind dazu die beispielhaften Orientierungen der Magnetpole des umlaufenden Ringmagneten dargestellt sowie die Aufteilung der Kreisfläche in vier Quadranten.

Es ist unmittelbar ersichtlich, dass jeder der Sensoren 14a, 14b bei einem Umlauf des Ringmagneten von vier Polen passiert wird. Es ist dabei jedoch zu beachten, dass aufgrund der Anordnung der Hall-Sensoren 14a und 14b auf der Platine 13 eine weitere Phasenverschiebung der detektierten Magnetfelder erzeugt wird. Die Hall-Sensoren weisen nämlich mit ihren Detektionsachsen nicht in Richtung einer radialen Verbindungsgeraden vom Rotationszentrum zum Ringmagneten, sondern sind demgegenüber um einen Winkel von 45°C verkippt. Der Hall-Sensor 14a ist dabei von einer derartigen radialen Geraden vom Rotationszentrum zum Ringmagneten um 45°C nach rechts verkippt, der Sensor 14b hingegen um 45°C nach links. Daraus resultiert, dass die von den Hall-Sensoren detektierten Signale tatsächlich eine Phasenverschiebung von 90°C aufweisen.

Ein schematischer Signalverlauf der Signale der Sensoren ist in Figur 5 gezeigt, wobei die Signale des Sensors 14a und die Signale des Sensors 14b im Wesentlichen gleiche Amplituden bei einer Phasenverschiebung von 90°C aufweisen. Die Darstellung der Figur 5 zeigt einen kompletten Umlauf des Ringmagneten, wobei aufgrund der Vier-Pol-Eigenschaft des Ringmagneten zwei volle Signalzyklen erscheinen.

Außerdem ist gezeigt, dass die Hall-Sensoren im Wechsel positive und negative Spannungssignale zeigen, die von einer Auswerteschaltung ausgewertet werden. Die folgende Signalmatrix zeigt den zeitlichen Verlauf der Signale, wobei nur ausgewertet wird, ob die Signale ein positives oder negatives Vorzeichen aufweisen.

| | Quadrant 1 | | Quadrant 2 | | Quadrant 3 | | Quadrant 4 | |
|---|---|---|---|---|---|---|---|---|
| Signal von Sensor 14a | + | - | - | + | + | - | - | + |
| Signal von Sensor 14b | + | + | - | - | + | + | - | - |

In der Tabelle sind zeitgleiche Signalpaare der beiden Sensoren 14a, 14b übereinander dargestellt. Bei der Drehung des Rotationskörpers wechseln die Signalkombinationen. Im ersten Quadranten zeigt der Sensor 14a ein positives Signal, ebenso der Sensor 14b (++ in erster Signalspalte in Quadrant 1). Mit fortschreitender Drehung wird das Signal vom Sensor 14a negativ, das Signal von 14b bleibt positiv (-+ in zweiter Signalspalte in Quadrant 1). Mit weiterer Drehung werden beide Signale negativ (-- in dritter Signalspalte). Es wird deutlich, dass durch Auswertung eines Signalübergangs von einem Signalpaar zum folgenden Signalpaar unmittelbar bestimmt werden kann, in welche Richtung sich der Rotationskörper dreht, da die Signalwechsel eindeutig für die Drehrichtung sind.

Wird z.B. ein Übergang -+/-- detektiert, also in der obigen Tabelle nach rechts, zeigt dies eine erste Drehrichtung an.

Ein Übergang -+/++ zeigt hingegen eine Drehung in die entgegengesetzte Richtung an.

Es ist bekannt, dass die Auswertung bezüglich eines positiven oder negativen Signals, also eher eine binäre bzw. qualitative Auswertung des Signals, mit deutlich robusterer und einfacherer Technik möglich ist als die Auswertung eines absoluten Signals. Die Auswertung der Drehbewegung ist daher besonders verlässlich, da die Signale von zwei Sensoren zusammen ausgewertet werden und gleichzeitig die Drehrichtung verifiziert werden kann. Die Manipulierbarkeit wird dabei deutlich verringert. Insbesondere kann die Folge von Signalübergängen auf Plausibilität überprüft werden, also z.B., ob jeder Quadrant tatsächlich komplett durchlaufen wird.

Der Schlüssel zum besonderen Vorteil dieser Ausführungsform liegt in der Auswertung von den Signalen von zwei Sensoren, die phasenverschoben von demselben Magnetfeld beeinflusst werden, und wobei die Signale gemeinsam ausgewertet werden.

Eine Abtastung der Hall-Sensoren findet in dieser bevorzugten Ausführungsform bei einigen 10Hz statt, zum Beispiel 32Hz. Wird von einer Drehgeschwindigkeit des Rotationskörpers von bis etwa 2Hz ausgegangen, finden die Polwechsel mit höchstens 8Hz statt, da vier Pole auf dem Magneten angeordnet sind. Bei gleichmäßiger Drehung würde jede der oben stehenden Signalkombinationen, von denen bei jedem Umlauf die tabellarisch gezeigten acht Kombinationen auftreten, sicher erfasst (acht Signalkombinationen treten 2 mal pro Sekunde auf, also Erfassung von sechzehn Signalkombinationen mit zeitlich gleichverteilten 32 Messungen).

Eine derartige Abtastrate hat besonders positive Auswirkungen auf den niedrigen Energieverbrauch der Einrichtung.

Zusätzlich können bei der erfindungsgemäßen Einrichtung auch die Analogsignale der beiden Sensoren ausgewertet werden. Es ist beispielsweise möglich, die Summe der Amplitudenquadrate der Sensorsignale zu bilden und zu prüfen, ob diese Summe der Amplitudenquadrate in einem Wertebereich liegt, welcher einen plausiblen Wertebereich wiedergibt.

Wird ein derartiger Zähler, beispielsweise durch das Nahebringen eines äußerst starken Magneten, einem Manipulationsversuch ausgesetzt, kann dieser üblicherweise detektiert werden. Die Signale der Hall-Sensoren werden so stark verändert, dass die Summe der Amplitudenquadrate aus dem zulässigen Korridor heraustritt. Außerdem erfasst die Auswerteschaltung bei einer hohen Amplitudenquadratsumme, dass keine Veränderung der Signale auftritt, also keine Drehbewegung stattfindet. Dies wäre dann der Fall, wenn durch das Magnetfeld die Signalantwort der Hall-Sensoren beispielsweise in dem positiven oder negativen Bereich verschoben wird, treten jedoch keine Plusminusübergänge mehr auf, registriert das Zählwerk keine Drehbewegung. Durch eine Plausibilitätskontrolle und Auswertung der Analogsignale einerseits und der Signalkombination andererseits ist damit eine Manipulationsdetektion möglich.

Die Erfindung ist selbstverständlich auch auf Einrichtungen mit mehr oder weniger Polen im Ringmagneten anwendbar bzw. auf Einrichtungen, welche nicht von einem Ringmagneten, sondern einer Mehrzahl von Einzelmagneten Gebrauch machen. Wesentlich ist, dass der Rotationskörper ein Magnetfeld erzeugt, welches von Magnetfeldsensoren detektiert wird und dass ein weichmagnetisches Material als magnetischer Spiegel dient und den Rotationskörper in axialer Richtung auf der Drehachse stabilisiert.

## Patentansprüche

1. Zähleinrichtung für Fluidströme, mit einem Gehäuse, dessen Inneres vom Fluid durchströmbar ist, wobei in einer Gehäusewandung eine Einstülpung in das Gehäuseinnere ausgebildet ist, welche wenigstens abschnittsweise als Lagerkörper geformt ist und
mit einem magnetischen Rotationskörper, welcher im Gehäuseinnern auf dem Lagerkörper drehbar gelagert ist und durch einen Fluidstrom zur Rotation auf dem Lagerkörper antreibbar ist,
wobei im Innern des Lagerkörpers wenigstens ein Magnetfeldsensor zur Detektion eines Magnetfeldes des magnetischen Rotationskörpers angeordnet ist, dessen Signale als Maß für die Rotation des Rotationskörpers und des Fluidstroms auswertbar sind,
**dadurch gekennzeichnet,**
**dass** im Lagerkörper ein Stabilisierungskörper aus weichmagnetischem Material angeordnet ist, welcher durch ein den Lagerkörper durchgreifendes Magnetfeld des Rotationskörpers magnetisierbar ist und die Lage des magnetischen Körpers in axialer Richtung des Lagerkörpers stabilisiert.

2. Zähleinrichtung nach Anspruch 1, wobei der Stabilisierungskörper als ringförmiger Körper ausgebildet ist, welcher radialsymmetrisch um die durch den Lagerkörper verlaufende Drehachse des Rotationskörpers angeordnet ist.

3. Zähleinrichtung nach Anspruch 1 oder 2, wobei der Rotationskörper einen ringförmigen Magnetkörper aufweist, der entlang seines Umfangs wenigstens vier Magnetpole aufweist.

4. Zähleinrichtung nach Anspruch 3, wobei im Lagerkörper zwei richtungssensitive Magnetfeldsensoren angeordnet sind und wobei als Magnetkörper ein Vier-Pol-Ringmagnet verwendet wird.

5. Zähleinrichtung nach Anspruch 4, wobei die Magnetfeldsensoren derart angeordnet sind, dass sie sich auf gleicher axialer Höhe entlang der Drehachse des Rotationskörpers befinden, wobei Sie in Drehrichtung um einen Winkel um die Drehachse versetzt sind.
